# EUROPEAN PATENT APPLICATION

(11) **EP 1 396 526 A2**
(43) Date of publication of application: **10.03.2004**
(21) Application number: 03255619.3
(22) Date of filing: 09.09.2003
(51) Int. Cl.: C09C 3/10, C09C 3/00, C09C 1/30, C09C 1/40, B41M 5/00

(54) **Aqueous dispersion comprising inorganic pigment-cationic resin composite fine particles and ink jet recording material containing same**

(30) Priority: 09.09.2002 JP 2002262727
(71) Applicant: Oji Paper Company Limited, Tokyo 104-0061 (JP)
(72) Inventor: Kado, Kumiko, Tokyo 178-0065 (JP); Kitamura, Ryu, Yokohama-shi, Kanagawa 227-0055 (JP)
(74) Representative: Harrison, Ivor Stanley

(57) **Abstract**

An aqueous dispersion of inorganic pigment-cationic resin composite fine particles, having a high dispersing property and a high dispersion stability, contains agglomerate particles of a cationic resin which has cationic polymerization units having a five-membered cyclic amidine structure of the formula (1), with inorganic pigment particles having an average primary particle size of 3 to 40 nm, the agglomerate particles having an average secondary particle size controlled to from 10 nm to 1.0 µm.

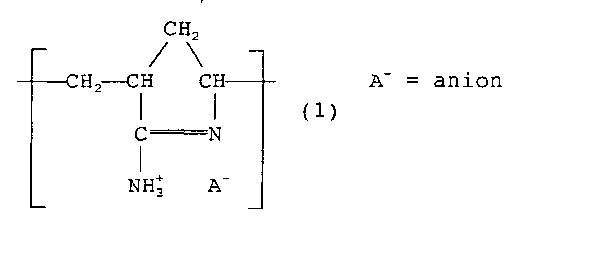

## Description

### TECHNICAL FIELD

The present invention relates to an aqueous dispersion comprising inorganic pigment-cationic resin composite fine particles and an ink jet recording material containing the composite fine particles. More particularly, the present invention relates to an aqueous dispersion of inorganic pigment-cationic resin composite fine particles which have excellent dispersing property and dispersion stability and superior receiving and fixing properties for the inks for ink jet recording, and to an ink jet recording material containing the composite fine particles and thereby exhibiting a high ink absorbing property and a high gloss and being capable of recording ink images having high water resistance, wet blotting resistance and a clarity comparable to that of silver salt photographic images.

### BACKGROUND ART

An ink jet recording system, in which an aqueous ink is jetted through fine nozzles toward an ink jet recording material to form ink images on the recording material, is advantageous in that the noise from the recording procedure is low, full color images can be easily recorded, high speed recording is possible and the recording cost is low in comparison with that of other printing systems and, therefore, the system is widely utilized in, for example, terminal printers and plotter of various types of computers, particularly personal computers.

Currently, ink jet recording printers are widely spread and thus an enhancement of the performance, particularly, precision and printing speed, of the ink jet recording printers are strongly required. Also, due to the development of digital cameras, the recording materials usable for the ink jet recording system must have enhanced properties. Namely, there is a strong demand of improved ink jet recording material having excellent water resistance and wet blotting resistance and capable of recording ink images having a clarily and durability comparative to those of silver salt photographic images. Further the improved ink jet recording material must exhibit a high gloss to make the color tones of the recorded ink images similar to those of photographic images.

To impart a high gloss to the surface of the ink jet recording material, a method in which the ink jet recording material is passed between a pair of rollers of a calender machine, such as a super calender, under pressure and at a high temperature, to smooth a surface of an ink receiving layer, is known. However, the above-mentioned calendering method is unsatisfactory in the resultant degree of gloss and causes a problem in that the sizes of fine pores distributing in the ink receiving layer decrease, and thus the ink-absorption of the ink receiving layer reduces. Particularly, to respond to the current trend that the ink jet printer is provided with a photo ink system by which ink.images are formed by superposing ink images of low concentration inks on each other, to form ink images having a low surface roughness and color tones close to that of the photographic images, the ink jet recording material must have a high ink absorption.

Many types of ink jet recording materials, which comprise a support comprising a plastic resin film or a resin-coated paper sheet having high glossiness and smoothness and an ink receiving layer formed on a surface of the support and comprising an ink-absorbing resin comprising at least one member selected from, for example, starch, glatin, water-soluble cellulose compounds, polyvinyl alcohol and polyvinyl pyrrolidone, are known. The ink jet recording materials having the above-mentioned type of ink receiving layer exhibit a high gloss. However, the ink receiving layer exhibits a low ink absorbing rate and a low ink-drying rate and thus the recording efficiency of the ink receiving layer is low. Further, this type of ink receiving layer is disadvantageous in that an uneven ink-absorption may be generated and the resultant ink jet recording material has a problem that the water resistance and curling resistance of the recording material are unsatisfactory.

To solve the above-mentioned problem, it is known that a coating layer comprising, as a principal component, super fine pigment particles, can be used as an ink receiving layer.

Japanese Patent Publication No. 2-274,857 discloses an ink jet recording material, having an ink receiving layer, comprising colloidal silica particles having a small particle size. This type of ink receiving layer has a high gloss and water resistance. However, as the colloidal silica particles are in the form of primary particles, ink-receiving pores are not formed in a sufficient amount in resultant ink receiving layer, and thus the ink-absorbing capacity of the ink receiving layer is not satisfactory.

Also, Japanese Patent Publication No. 8-67,064 discloses an ink jet recording material having an ink receiving layer containing colloidal silica particles having a small particle size. This ink receiving layer exhibits a high gloss and a water resistance. However, as the colloidal silica particles are in the form of primary particles, the resultant ink receiving layer does not contain the ink-receiving pores in a sufficient amount. Thus, the resultant ink receiving layer is also unsatisfactory in the ink absorption capacity.

Japanese Unexamined Patent Publication No. 8-118,790 discloses an ink jet recording material having an ink receiving layer containing the colloidal silica particles similar to those mentioned above. In this case, the resultant ink receiving layer has high gloss and water resistance. However, the resultant ink receiving layer does not contain the ink receiving pores in a sufficient amount and, therefor, exhibits an unsatisfactory ink absorption capacity.

Also, Japanese Unexamined Patent Publication No. 9-286,162 discloses an ink jet recording material having an ink receiving layer containing dry-method silica particles having a low average particle size. The resultant ink receiving layer exhibits a high gloss and water resistance. However, in the resultant ink receiving layer, the ink receiving pores cannot be formed in a sufficient amount, and thus the ink absorption capacity of the ink receiving layer is unsatisfactory.

Japanese Unexamined Patent Publication No. 10-217,601 discloses an ink jet recording material having an ink receiving layer containing fine inorganic particles and a cationic and water-soluble mordant. In this ink receiving layer, no aggregation of the inorganic particles with the cationic mordant occurs and thus no reduction of the gloss of the ink receiving layer occurs. However, the resultant ink receiving layer exhibits an unsatisfactory ink absorption capacity.

Further, Japanese Unexamined Patent Publication No. 2-43,083 discloses an ink jet recording material on which the recorded ink images have a high resistance to fading and an enhanced image retention, when the recorded ink jet recording material is stored in a room. The recording material has an overcoat layer comprising, as a principal component, an aluminum oxide and an undercoat layer having an ink-absorbing property. However, the color density of the ink images recorded on the recording material is unsatisfactory.

In Japanese Unexamined Patent Publication No. 9-286,165, the inventors of the present invention disclose an ink jet recording material having at least one ink receiving layer comprising silica particles having an average primary particle size of 3 to 40 nm and an average secondary particle size of 10 to 300 nm, and a water-soluble resin. When the above-mentioned silica particles are contained, the resultant ink receiving layer of the ink jet recording material exhibits a high ink absorption capacity and a high color density of the recorded ink images. Thus, the clarity of the recorded ink images is significantly improved.

Japanese Unexamined Patent Publication No. 10-193,776 discloses an ink jet recording material having an ink receiving layer comprising fumed silica particles having an average primary particle size of 20 nm or less and a hydrophilic binder. The ink receiving layer exhibits a high gloss and a high color density of the recorded ink images. In this case, however, the silica particles exhibit an anionic property and thus the recorded ink dye images exhibit a poor water resistance. To firmly fix the dye images, the silica particles must be cationized. Also, the fumed silica sol exhibits a high thixotropic property and thus a problem such that the coating liquid containing the fumed silica sol exhibits an insufficient stability in practice, occurs.

To solve the problem, the inventors of the present application have provided, in Japanese Unexamined Patent Application No. 10-181,190, an ink jet recording material having an ink receiving layer containing cationic resin-containing fine pigment particles prepared by pulverizing and dispersing inorganic pigment particles in an aqueous solution of a cationic resin, for example, diaryldimethyl ammonium chloride-acryl-amide copolymer, the particles having an average particle size of 500 nm or less.

Also, Japanese Unexamined Patent Publication No. 10-181,191 discloses cationic resin-containing fine pigment particles prepared by mixing an aqueous dispersion of fine pigment particles having an average primary particle size of 40 nm or less and an average secondary particle size of 300 nm or less, with a cationic resin, for example, diaryldimethyl ammonium chloride-acrylamide copolymer or a diaryldimethyl ammonium chloride; and pulverizing and dispersing the resultant agglomerated particles to an average particle size of 1 µm or less.

In the above-mentioned method of producing the cationic resin-containing fine pigment particles, using above-mentioned cationic resin, when the resultant aqueous dispersion of the fine particles is used to produce an ink jet recording material, the ink images recorded on the resultant recording material are unsatisfactory in water resistance and wet blotting resistance.

Various types of ink jet recording materials, each having an ink receiving layer comprising alumina hydrate, are known. For example, Japanese Unexamined Patent Publication No. 8-324,098 reports that when an alumina hydrate-containing aqueous dispersion prepared by dispersing the alumina hydrate with high speed aqueous streams is employed to produce an ink jet recording material, the resultant ink receiving layer exhibits a high transparency, but the ink absorption capacity of the ink receiving layer is insufficient in practice.

Also, the ink receiving layer containing the alumina hydrate is disadvantageous in that the color density of the recorded dye ink images is insufficient and thus clear images cannot be obtained. For example, Japanese Unexamined Patent Publication No. 8-132,731 discloses a recording media containing an alumina hydrate having a boehmite structure. The boehmite structure alumina hydrate has a high build-up property and thus enables an ink receiving layer to have high gloss and smoothness and a satisfactory transparency and to be capable of recording ink images having a high color density. In this case, however, the resultant ink receiving layer is disadvantageous in that the ink absorption capacity of the resultant ink receiving layer is lower than that containing silica in place of the alumina hydrate, the color density of the recorded ink images is insufficient, and the acetic acid used as a deflocculant generates an unpleasant odor.

Generally, the inks for ink jet recording contains a high content of a solvent consisting of water, etc. Particularly, to prevent a clogging of the ink jetting nozzle (head), the ink contains a solvent having a high boiling temperature. Thus, after the recording procedure, on the recorded ink receiving layer, the dye ink is present together with the solvent. Particularly, the high boiling temperature solvent remains together with the dye ink on the ink receiving layer for a long time. The remaining solvent causes a problem such that the ink images blot with lapse of time, and the color of the ink images cannot become stable within a short time. Particularly, the above-mentioned problem significantly occurs in the ink receiving layer containing alumina, or alumina hydrate. Therefor, although the alumina and alumina hydrate are cationic pigments in the form of fine particles, the dye-holding capacity of the alumina or alumina hydrate is insufficient and must be further improved.

It is well known that, to prevent the blotting of the ink at the fringe portions of the images and to enhance the water resistance of the dye ink images, various types of cationic resins, for example, polyamines, polyethyleneimines, dicyandiamide-condensation product or quaternary ammonium salts having specific chemical structures are contained in the ink receiving layer. For example, Japanese Unexamined Patent Publication No. 56-84,992 discloses an ink jet recording method in which ink images having an enhanced water resistance are formed by using a polycationic polymeric elecrolyte. Also, Japanese Unexamined Patent Publication No. 60-46,288 discloses an ink jet recording method in which yellow ink images having an enhanced water resistance are formed by employing any one selected from water-soluble divalent metal salts, polyamines, alkylamine salts and quaternary ammonium salts. Further, Japanese Unexamined Patent Publication No. 60-161,188 discloses an ink jet recording paper sheet in which the water resistance of the recorded dye images is enhanced by using a resin type dye-fixing agent or a quaternary ammonium salt having no surface activity.

Further, Japanese Unexamined Patent Publication No. 61-293,886 discloses a chemical agent for an ink jet recording sheet comprising a specific quaternary ammonium salt having a aliphatic mono-carboxyl acid residue which contributes to enhancing the hight fastness and the water resistance of the recorded dye images.

Further, Japanese Unexamined Patent Publication No. 63-160,875 discloses an aqueous ink-recording sheet in which a cationic synthetic resin, a cellulose derivative and polyvinyl alcohol or N-vinyl pyrrolidone are employed to enhance the water resistance of the recorded aqueous ink (dye) images.

Further, Japanese Unexamined Patent Publication No. 6-92,012 discloses an ink jet recording paper sheet in which a secondary amine and an epihalohydrin are employed to enhance both the water resistance and the light fastness of the recorded dye images.

However, the cationic resins disclosed in the above-mentioned publications are not fully satisfactory in at least one of water resistance, wet blotting resistance, color density of the recorded ink images on the recording surface and ink absorption properties of the receiving paper sheet.

Japanese Unexamined Patent Publication No. 2001-150,795 discloses an ink jet recording sheet comprising a support, a coating layer formed on the support and comprising fine anhydrous silica particles and polyvinyl alcohol and a coloring material-receiving layer formed by coating a solution, containing a cationic resin having polymerization units with a five-membered cyclic amidine structure, on the coating layer.

Japanese Unexamined Patent Publication No. 2001-39,009 discloses an ink jet recording sheet comprising a base sheet and an ink receiving layer formed on the base sheet and comprising a colloidal silica and polyvinyl alcohol and/or polyvinyl pyrrolidone and polyvinyl amidine. In the ink receiving layer, the polyvinyl amidine is locally located in the surface portion thereof, to enhance the water resistance of the recorded ink images.

Japanese Unexamined Patent Publication No. 8-39,927 discloses in ink jet recording material produced by coating a paper sheet surface with a surface coating agent comprising a water soluble polymer comprising polymerization units having a five-membered cyclic amidine structure, by a size press.

Further, Japanese Unexamined Patent Publication No. 10-195,132 discloses a water-soluble polymer having amidine groups and produced by copolymerizing a dimethyldiaryl ammonium chloride with N-vinylformamide and acrylonitrile, hydrolysing the resultant copolymer and cyclizing the resultant hydrolysis product and, further, an ink jet recording paper sheet produced by coating a base paper sheet surface with the water-soluble polymer.

However, all these ink jet recording paper sheets are insufficient in the ink absorption properties and the recorded ink images are also insufficient in the water resistant and the wet blotting resistance.

Japanese Unexamined Patent Publication No. 11-58,934 discloses an ink jet recording material comprising a support (paper sheet) and an ink receiving layer formed on the support and comprising a wax emulsion and a water-soluble polymer having a five-membered cyclic amidine structure. In this recording material, however, the recorded ink images are insufficient in the color density, whereas the water resistance and the wet blotting resistance of the ink images are good.

Still further, Japanese Unexamined Patent Publication No. 8-90,899 discloses an ink jet recording sheet comprising a support and an ink-receiving layer formed on the support and comprising a polyvinylamine copolymer, a starch modified with a phosphate ester, silica and polyvinylalcohol. In this recording sheet, the recorded ink images exhibit good water resistance and wet blotting resistance. However, the recording sheet is disadvantageous in that the glossiness of the recording surface and the color density of the recorded ink images are insufficient.

### DISCLOSURE OF THE INVENTION

An object of the present invention is to provide an aqueous dispersion of inorganic pigment-cationic resin composite fine particles, having an excellent dispersing property and stability, and an ink jet recording material having an ink receiving layer containing the composite fine particles and exhibiting high ink absorption properties and gloss, and capable of recording ink images having high water resistance and wet blotting resistance and exhibiting a high clarity comparable to that of silver-salt photographic images.

The aqueous dispersion of inorganic pigment-cationic resin composite fine particles, of the present invention comprises
an aqueous medium and solid particles dispersed in the aqueous medium,
wherein
the solid particles comprising inorganic pigment-cationic resin composite fine particles which are particles of agglomerates of a cationic resin comprising cationic polymerization units having a five-membered cyclic amidine structure of the formula (1): 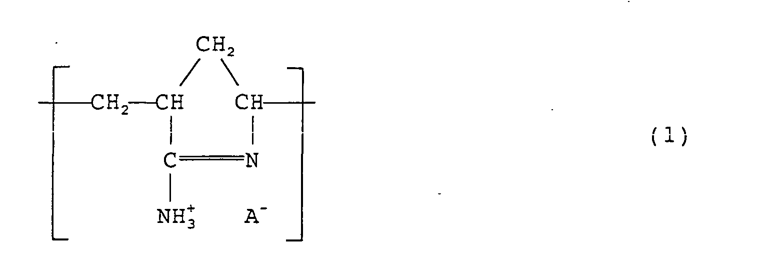 in which formula (1), A⁻ represent an anion, with inorganic pigment particles having an average primary particle size of 3 to 40 nm, and the agglomerate particles having an average secondary particle size controlled within the range of from 10 nm to 1.0 µm.

In the aqueous dispersion of inorganic pigment-cationic resin composite fine particles of the present invention, the cationic resin preferably comprises 20 to 90 molar% of the cationic polymerization units having a five-membered cyclic amidine structure of the formula (1) and 10 to 80 molar% of a polymerization units of the general formula (2): 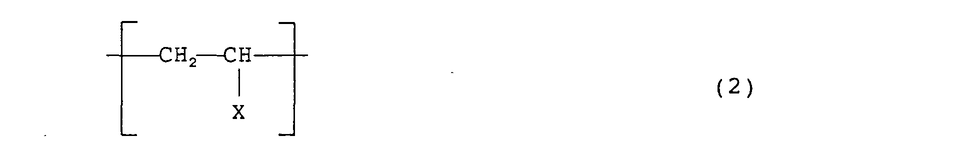 in which formula (2), X represents a member selected from the group consisting of a cyano group, amine hydrochloride group and a formamide group.

In the aqueous dispersion of inorganic pigment-cationic resin composite fine particles of the present invention, the cationic polymerization units of the formula (1) and'the polymerization units of the formula (2) are preferably present in a molar ratio in the range of from 10:1 to 1:3.

In the aqueous dispersion of inorganic pigment-cationic resin composite fine particles of the present invention, the cationic resin preferably has a weight average molecular weight of 10,000 or more.

In the aqueous dispersion of inorganic pigment-cationic resin composite fine particles of the present invention, the inorganic pigment and the cationic resin are preferably present in a mass ratio in the range of from 100:1 to 100:30, in the inorganic pigment-cationic resin composite fine particles.

In the aqueous dispersion of inorganic pigment-cationic resin composite fine particles of the present invention, the average secondary particle size of the inorganic pigment-cationic resin composite fine particles is preferably in the range of from 10 nm to 500 nm.

In the aqueous dispersion of inorganic pigment-cationic resin composite fine particles of the present invention, the inorganic pigment preferably comprises a silica pigment.

In the aqueous dispersion of inorganic pigment-cationic resin composite fine particles of the present invention, the silica pigment preferably comprises fumed silica particles having a specific surface area of 180 to 380 m²/g.

An ink jet recording sheet of the present invention comprises a substrate sheet and at least one ink receiving layer formed from a coating liquid containing the aqueous dispersion of inorganic pigment-cationic resin composite fine particles as defined above, and a binder, on least one surface of the substrate sheet.

The aqueous dispersion of inorganic pigment-cationic resin composite fine particles (which may be referred to cationic composite fine particles hereinafter) of the present invention has excellent dispersion stability. Also, the ink jet recording material having an ink receiving layer comprising the cationic composite fine particles exhibits a good gloss and ink absorption and the ink images recorded on the ink receiving layer exhibit excellent water resistance, excellent wet blotting resistance and high color density.

### BEST MODE OF CARRYING OUT THE INVENTION

The inventors of the present invention have made intensive research into ink-receiving pigments capable of imparting excellent water resistance and wet blotting resistance, and high color density and clarity, to ink images recorded on an ink receiving layer of an ink jet recording material and further a good gloss to the ink receiving layer. As a result of the research, the inventors have found that an aqueous dispersion of an inorganic pigment-cationic resin composite fine particles prepared by mixing a cationic resin having a backbone chain comprising polymerization units having a five-membered cyclic amidine structure with inorganic pigment particles having an average primary particle size of 3 to 40 nm, in an aqueous medium, and controlling the average secondary particle size of the resultant agglomerate particles into the range of from 10 nm to 1.0 µm, exhibits excellent dispersing property and dispersion stability of the resultant cationic composite fine particles.

Also, it has been found that when an coating liquid comprising the cationic composite fine particles is coated and dried on a substrate material, the resultant ink receiving layer exhibit a good gloss and an excellent ink absorption, and the ink images recorded on the ink receiving layer exhibits excellent water resistance, wet blotting resistance, color density and clarity.

The present invention was completed on the basis of the findings of the inventors.

The cationic resin usable for the present invention has a backbone chain having polymerization units having a cationic five-membered cyclic amidine structure represented by the general formula (1).

In the production of the cationic resin, acrylonitrile monomer and N-vinyl formamide are copolymerized in a molar ratio of 1:3 to 3:1; the resultant copolymer is suspended in water; the resultant aqueous suspension of the copolymer is heated in the presence of an acid, for example, hydrochloric acid, to cause cyano groups (-CN) of acrylonitrile units and amide groups (-CONH₂) of vinyl formamide units located adjacent to each other, to react with each other, to form five-membered amidine structures. The resultant cationic resin further comprises non-reacted acrylonitrile units and N-vinyl formamide units and, as by-product units, vinylamine hydrochloride units, etc.

The inorganic pigment particles usable for the present invention have an average primary particle size of 3 to 40 nm. If the average primary particle size of the inorganic pigment particles is less than 3 nm, the aqueous dispersion containing the inorganic pigment particles exhibits a poor dispersing property and a poor dispersion stability and thus is difficult to practically use. Also, if the average primary particle size is more than 40 nm, the resultant ink images recorded on an ink receiving layer of an ink jet recording material comprising the inorganic pigment particles have an insufficient color density and exhibit insufficient wet blotting resistance.

The inorganic pigment particles usable for the present invention may be in the form of the secondary particles each consisting of a plurality of primary particles or only in the form of primary particles.

There is no limitation to the type and composition of the inorganic pigment usable for the present invention as long as the pigment has an average primary particle size of 3 to 40 nm. The inorganic pigment may comprise at least one member selected from, for example, silica (including cation-modified silica with, for example, alumina), kaolin, clay, calcined clay, zinc oxide, tin oxides, magnesium sulfate, aluminum hydroxide, alumina and alumina hydrates (including those in various types of crystal forms for example, χ, κ, γ, δ, θ, η, ρ, pseudo γ and α-aluminas, a boehmite structure and a pseudo boehmite structure), calcium carbonate, satin white, aluminum silicate, magnesium hydroxide, calcium fluoride, smectite, zeolite, magnesium silicate, magnesium carbonate, magnesium oxide and diatomaceous earth. Among them, alumina and silica which exhibit a high ink absorption when used in an ink receiving layer are preferably used, particularly silica is preferred.

The silica particles used as an inorganic pigment for the present invention preferably have a BET specific surface area of 180 to 300 m²/g, more preferably 200 to 350 m²/g. If the BET specific surface area is less than 180 m²/g, the resultant ink receiving layer may has an insufficient ink absorption and the recorded ink images may have an insufficient color density. Also, if the BET specific surface area is more than 380 m²/g, the aqueous sol of the resultant silica may exhibit insufficient dispersing property and dispersion stability. The BET specific area refers to a surface area per unit mass of the particles, and is determined by drying a sample of the fine pigment particles at a temperature of 105°C, placing the dried particle sample under vacuum at a temperature of 200°C for 2 hours to deaerate the sample, determining a nitrogen absorption and desorption isothermic curve of the deaerated sample by using a meter (model: SA 3100, made by Coulter Co.) and calculating a BET specific surface area of the sample, from the curve, in accordance with the method.

The above-mentioned silica exhibits good dispersing property and dispersion stability in an aqueous slurry. Particularly, when fumed silica is used for the present invention, not only the pulverization of the fumed silica can be effected with a relatively low mechanical power, but also the resultant fine particles exhibit a low refractive index and, thus, when the cationic composite fine particles containing the pulverized fumed silica particles are used, the resultant ink receiving layer exhibits high transparency, glossiness, and smoothness and the ink images recorded on the ink receiving layer exhibit high color density and clarity. The fumed silica is produced by burning a material consisting of silicon tetrachloride with oxygen and hydrogen.

In the production of the cationic composite fine particles usable for the present invention, the cationic resin to be mixed with the above-mentioned inorganic pigment is selected from those having a backbone chain comprising polymerization units having the five-membered cyclic amidine structure represented by the general formula (1). In the formula (1), A⁻ represents an anion, for example, a chlorine ion or a bromine ion.

The reasons of the enhancement of the dispersing property and dispersion stability of the resultant cationic composite fine particle sol when the above-mentioned specific cationic resin is employed, has not yet been fully clarified. It is assumed that in the preparation of the inorganic pigment-cationic resin composite, the specific cationic resin having the amidine structure-having polymerization units exhibits an significantly appropriate intensity of cationic property for uniformly coating the surface of each of the inorganic pigment particles.

The cationic resin usable for the present invention preferably comprises 20 to 90 molar% of the polymerization units having the five-membered cyclic amidine structure. The higher the content of the polymerization units having the cyclic amidine structure, the higher the effect of the present invention. However, as long as the cationic resin is produced by heating the above-mentioned copolymer in an aqueous solution of an acid such as, for example, hydrochloric acid, it may be difficult to produce a cationic resin having the amidine structure-having polymerization units in a content of more than 90 molar%. If the content of the amidine-structure-having polymerization units is less than 20 molar%, the resultant cationic composite fine particles may not allow the effect of the present invention to be fully realized. The content of the amidine-structure-having polymerization units in the cationic resin is more preferably 30 to 85 molar%.

The cationic resin usable for the present invention is produced from acrylonitrile monomer and N-vinylformamide. In the copolymerization of the monomers, the molar ratio of the acrylonitrile and N-vinylformamide is preferably 1:1, the molar content of N-vinyl formamide monomer in the copolymerization system is preferably 40 to 50%. In the copolymerization reaction of the above-mentioned comonomers and the hydrolysis reaction of the resultant copolymer under heating, the reaction systems contain non-reacted acrylonitrile and N-vinylformamide monomers and by-product monomers, such as vinylamine hydrochloride, and therefore, the resultant aqueous solution of the cationic resin contains the monomers corresponding to the polymerization units represented by the general formula (2) in which X represents a cyano group, an amine hydrochloride group (for example, -NH₃Cl) or a formamide group, in a content of 10 to 80 molar%.

In the general formula (2), when X represents a formamide group, the resultant water-soluble copolymer is unstable. Therefore, in practice, the formamide group is preferably neutralized with hydrochloric acid to form an amine hydrochloride. When X represents a cyano group, the resultant cationic resin contributes to enhancing the water resistance and the light fastness of the ink images recorded on the ink receiving layer. Also, when X represents an amine-hydrochloride group, the resultant cationic resin exhibits an increased intensity of cationicity.

In the cationic resin, the content of the polymerization units of the general formula (2) is preferably 10 to 80 molar%, more preferably 10 to 60%. Also, in the cationic resin, the molar ratio of the polymerization units of the general formula (1) to the polymerization units of the general formula (2) is preferably in the range of from 10:1 to 1:3. As the cationic resin is produced from a copolymer of acrylonitrile with N-vinylformamide, when the molar ratio falls outside the above-mentioned range, the resultant cationic resin may exhibit an insufficient intensity of cationicity. Also, when the copolymer of acrylonitrile with N-vinylformamide is prepared in a molar ratio falling outside the above-mentioned range, the resultant copolymerization system may be disadvantageous in that the pH value of the copolymerization system is too low and the viscosity of the copolymerization system is too high. The cationic resin usable for the present invention can be obtained by appropriately controlling the pH value of the copolymerization system and the molecular weight of the copolymerization product.

The cationic resin for the present invention preferably has a weight average molecular weight (which may be shorted to "molecular weight" hereinafter) of 10,000 or more. When the molecular weight is less than 10,000, in the preparation of the inorganic pigment-cationic resin composite fine particles, the low molecular weight cationic resin easily penetrates into the pores formed between the pigment particles, and thus the resultant cationic composite fine particles may exhibit an insufficient ink absorption. Also, when the molecular weight of the cationic resin is more than 500,000, the particle size of the cationic resin particles dispersed in water may be too high, and the pulverization of the cationic resin particles may need a very large mechanical energy. Therefore, the weight average molecular weight of the cationic resin is more preferably in the range of from 10,000 to 500,000, still more preferably 10,000 to 400,000, further preferably 10,000 to 200,000, still further preferably 10,000 to 100,000.

In the preparation of the inorganic pigment-cationic resin composite fine particles, the mixing ratio by mass of the inorganic pigment to the cationic resin is preferably 100:1 to 100:30, more preferably 100:3 to 100:20. If the mass ratio of the cationic resin to the inorganic pigment is less than 1/100, the resultant cationic composite fine particle may cause the ink images recorded on the ink receiving layer containing the cationic composite fine particles to exhibit insufficient water resistance and wet blotting resistance. If the mass ratio of the cationic resin to the inorganic pigment is more than 30/100, an excessive amount of the cationic resin may block the pores formed in the inorganic pigment particles and thus the resultant cationic composite fine particles may exhibit an insufficient ink absorption.

To disperse and pulverize the cationic composite particles prepared by mixing the inorganic pigment with the cationic resin in an aqueous medium, a homomixer, a pressure-type homogenizer, a super sonic homogenizer, a microfluitizer, an altimizer, a nanomizer, high revolution mill, a roller mill, a container-drive medium mill, a medium-agitation mill, a sand grinder and/or a clear mixer can be employed.

In the case where the target average secondary particle size of the cationic composite fine particles is more than 1.0 µm, the disperse-pulverization can be sufficiently effected by using a homomixer having a relatively low mechanical power. When the target average secondary particle size is 1.0 µm or less, the disperse-pulverizing machine having a high mechanical power is preferably used to achieve the target particle size. For the purpose of the disperse-pulverization of the cationic composite particle, a pressure type dispersing method, a countercurrent clashing method and/or a high pressure pulverizing method is preferably utilized.

The above-mentioned pressure-type dispersing method is referred to a method of pulverizing material particles under high pressure by continuously passing a slurry-like mixture of the material particles through an orifice under a high pressure. The treatment pressure is 19.6 × 10⁶ to 343.2 × 10⁶ Pa (200 to 3500 kgf/cm²), more preferably 49.0 × 10⁶ to 245.3 × 10⁶ Pa (500 to 2500 kgf/cm²), still more preferably 98.1 × 10⁶ - 196.2 × 10⁶ Pa (1000 - 2000 kgf/cm²). By the above-mentioned high pressure treatment of the cationic composite particles, a sufficient dispersion and pulverization of the cationic composite particles can be attained. Further preferably, the slurry-like mixture passed through the orifice under high pressure is further subjected to a dispersion or pulverization system in which the particles are further pulverized by a countercurrent clashing. In the countercurrent clashing system, a dispersion liquid is introduced into an inlet of a countercurrent clashing disperse-pulverization apparatus under pressure; and in the apparatus, the dispersion liquid is divided into two portions and passed through two branched passages which are narrowed by using orifices, to increase the flow rate of the liquid; and the flow rate-accelerated portions of the dispersion liquid countercurrently impinge on each other to pulverize the particles. The portions of the apparatus in which the flows of the dispersion liquid are accelerated and impinge on each other are preferably formed of diamond to prevent the abrasion of the portions.

The high pressure pulverizer include a pressure type homogenizer, an ultrasonic homogenizer, microfluidizer and a nanomizer, and the high speed stream-impinging-type homogenizer includes a microfluitizer and nanomizer.

The aqueous dispersion comprising inorganic pigment-cationic resin composite fine particles are preferably stored and aged under heating. The lower limit of the heating temperature is preferably 35°C or more, more preferably 40°C or more, further preferably 55°C or more. Also, upper limit of the heating temperature is preferably 80°C or less, more preferably 75°C or less, further preferably 70°C or less. If the heating temperature is more than 80°C, the cationic resin in the resultant cationic composite fine particles may be discolored. The storage-aging time is variable in response to the heating temperature. Usually, the storage-aging time is preferably 8 hours or more, more preferably 16 to 240 hours, further preferably 24 to 132 hours, still further preferably 36 to 120 hours. The storage aging procedure under heating is considered to enhance the bonding of the cationic resin to the inorganic pigment particles, and thus to improve the dispersion property of the cationic composite fine particles the coating liquid containing an aqueous dispersion of the heat-aged cationic composite fine particles, for forming the ink receiving layer.

Generally, when a coating liquid containing the cationic composite fine particles having an average secondary particle size of more than 1.0 µm is coated, the resultant ink receiving layer may exhibit insufficient transparency and surface smoothness, and it may be difficult to record ink images having high color density and surface gloss. Also, if the average secondary particle size of the cationic composite fine particles is less than 10 nm, a disadvantage in that the resultant ink receiving layer exhibits an insufficient ink absorption may occur.

The aqueous dispersion of the present invention preferably comprises the inorganic pigment-cationic resin composite fine particles in a content of 5 to 50% by mass, more preferably 10 to 40% by mass. If the content of the cationic composite fine particles is less than 5% by mass, this low content may cause the resultant aqueous dispeision to be incomvenient in practice. Also, if the content is more than 50% by mass, the resultant aqueous dispersion may exhibit an insufficient dispersion stability in practice.

The ink jet recording material of the present invention comprises a substrate sheet and at least one ink receiving layer formed from a coating liquid comprising the aqueous dispersion of the inorganic pigment-cationic resin composite fine particles of the present invention and a binder, on at least one surface of the substrate sheet. The ink receiving layer may have either a single layered structure or a laminate structure constituted from a plurality of recording layers.

In the ink jet recording material of the present invention, the ink receiving layer may contain an inorganic pigment other than from the inorganic pigment-cationic resin composite fine particles. In the case where the ink receiving layer is constituted from a laminate of a plurality of recording layers on each other, each recording layer may contain both the cationic composite fine particles and the other inorganic pigment, or two or more recording layers may be different in the composition of the pigment from each other. Also, the ink receiving layer may contain a recording layer comprising both the cationic composite fine particles and the other inorganic pigment, a recording layer containing only the cationic composite fine particles and a recording layer containing only the other inorganic pigment.

The ink receiving layer of the ink jet recording material of the present invention preferably comprises one or more inside recording layers formed on the substrate sheet and an outermost recording layer laminated on an outside surface of a outermost one of the inside recording layers.

The inorganic pigment-cationic resin composite fine particles contained in the outermost recording layer in the ink receiving layer preferably have an average secondary particle size of 500 nm or less, more preferably 10 to 500 nm and comprise agglomerates of a plurality of primary particles of the inorganic pigment having an average primary particle size of 3 to 40 nm. Particularly, in this case, the inorganic pigment preferably comprises silica, more preferably fumed silica.

Also, when at least one inside recording layer contains silica produced by a gel method, the resultant ink receiving layer exhibits an enchanted wet blotting resistance of the ink images recorded thereon. The reasons for the enhancement of the wet blotting resistance of the recorded ink images has not yet been fully clarified. It is assumed that the pores formed between the primary particles in the gel method silica particles is fine, and thus the ink dye and ink medium penetrated into the fine pores are prevented from movement and are thus fixed in the fine pores.

To enhance the gloss of the ink receiving layer and the color density of the recorded ink images, the gel method silica particles preferably have an average secondary particle size of 1.2 µm or less, more preferably 800 nm or less, still more preferably 500 nm or less. The average primary particle size of the primary particles from which the secondary particles of the gel method silica are formed is about 3 to 50 nm.

The average primary particle size and the average secondary particle size of the inorganic pigment-cationic resin composite fine particles usable for the present invention are determined by the following measurement.

A 5% by mass aqueous dispersion of the cationic composite fine particles is prepared by agitating a mixture of the cationic composite fine particles with water by using a homomixer at a revolution rate of 5000 rpm for 30 minutes, and immediately after the preparation of the dispersion is completed, the resultant dispersion is coated in a coating amount of 3 g/m² on a transparent PET film, to provide a coating sample. An electron microscopic photograph of the coating sample was prepared at a magnification of 10,000 to 400,000 by using scanning and transmitting type electron microscopes. Then, the martin sizes of the primary particles and secondary particles appearing in an area of 5 cm x 5 cm of the electron microscopic photograph are measured and average values of the measured primary and secondary particles are calculated.

The method of measurement is disclosed in "FINE PARTICLE HANDBOOK, page 52, published by ASAKURA SHOTEN, 1991".

There is no limitation to the type, form and dimensions of the substrate sheet usable for the ink jet recording sheet of the present invention. The substrate sheet may be formed from an ink medium-absorbing sheet or a non-ink medium absorbing sheets. The ink medium-absorbing sheet may be selected from, for example, woodfree paper sheets, middle quality paper sheets, coated paper sheets, art paper sheets, cast-coated paper sheets. The non-ink medium absorbing sheet may be selected from, for example, plastic films, synthetic paper sheets and white films of polyethylene terephthalate, polyvinyl chloride, polycarbonates, polyethylene, and polypropylene. Also, the non-ink medium absorbing sheet may be selected from non-ink medium absorbing resin-coated sheet prepared by coating a support consisting of an ink medium-absorbing sheet or a non-ink medium absorbing sheet with a non-ink medium absorbing resin. The non-ink medium absorbing resin may be selected from resin material comprising, as a principal component, polyethylene, polypropylene, cellulose diacetate and mixtures thereof. Among them, polyethylene has a good adhesive property to the support and thus is preferably used as a non-ink medium absorbing resin for the substrate sheet.

In the case where the non-ink medium absorbing sheet is used as a substrate sheet, a close adhesion pretreatment or a adhesive treatment may be applied to the surface of the substrate sheet on which surface an ink receiving layer must be coated, to enhance the close adhesion property of the substrate sheet to the ink receiving layer. Particularly, when a resin-coated paper sheet is used as a non-ink medium absorbing substrate sheet, the surface of the resin coating layer is preferably treated by a corona discharge treatment or undercoated with gelatin or polyvinyl alcohol.

The back surface of the substrate sheet may be treated with a transportation-enhancing treatment, a anti-static treatment and/or a blocking-preventing treatment. The back surface treatment include chemical treatments with an anti-static agent or a blocking-preventing agent or addition of another coating layer.

There is no limitation to the smoothness of the substrate sheet. To obtain a high gloss and smooth recording surface of the ink jet recording sheet, the substrate sheet preferably has a Bekk smoothness of 300 seconds or more, determined in accordance with J. TAPPI No. 5, OKEN Type tester. Also, there is no limitation to the opaqueness of the substrate sheet. To obtain a similar appearance, particularly whiteness to naked eye observation, to a silver-salt photographic sheet, the substrate sheet preferably has an opaqueness of 85% or more, more preferably 93% or more determined in accordance with JIS P 8138.

The ink receiving layer of the ink jet recording sheet of the present invention comprises, in addition to the inorganic pigment-cationic resin composite fine particles, a binder (an adhesive) for binding the cationic composite fine particles to each other and the cationic composite fine particles to the substrate sheet.

The binder (adhesive) comprises at least one member of, for example, water-soluble polymeric materials, for example, polyvinyl alcohol compounds, such as polyvinyl alcohol, and modified polyvinyl alcohols, for example, cationic-modified polyvinyl alcohol, and silyl-modified polyvinyl alcohol; protain compounds such as casein, soybean protain and synthetic protains; starch; cellulose derivatives, for example, carboxymethylcellulose and methyl cellulose; and water-dispersible resins, for example, latices of conjugated diene polymers, for example, styrene-butadiene copolymers and methyl methacrylate-butadiene copolymers; latices of acrylic polymers; and latices of vinyl copolymers, for example, styrene-vinyl acetate copolymers. The above-mentioned polymeric materials for the binder may be used alone or in a mixture of two or more thereof.

In the binder usable for the present invention, polyvinyl alcohol, which exhibits an excellent binding effect, is preferably used. When a polyvinyl alcohol having a degree of polymerization of 3500 or more is employed, the coating liquid containing the polyvinyl alcohol exhibits a high viscosity and thus in the formation of the ink receiving layer from the coating liquid, generation of cracking in the ink receiving layer during the drying of the coated coating liquid layer by hot air blast can be restricted. Also, when a polyvinyl alcohol having a degree of saponification of 95% or more is used for the ink receiving layer, the swelling of the polyvinyl alcohol by the ink applied to the ink receiving layer is small and thus the resultant ink receiving layer exhibit an enhanced ink absorption.

Generally, the ratio in solid mass of the inorganic pigment-cationic resin composite fine particles or the total of the inorganic pigment-cationic resin composite fine particles and the other pigment to the binder is preferably in the range of from 100:2 to 100:200, more preferably 100:5 to 100:100. If the content of the binder is too high, the pores formed between the cationic composite fine particles in the resultant ink receiving layer may become to small and thus an ink receiving layer having a high ink absorption rate may be difficult to obtain. Also, if the content of the binder is too small, the resultant ink receiving layer may exhibit an insufficient resistance to cracking thereof.

In the ink jet recording sheet of the present invention, the ink receiving layer optionally comprises, as a light fastness-enhancing agent for the recorded ink images, at least one compound selected from the group consisting of phenolic compounds, boric acid, borate salts and cyclodextrin compounds. In the case where the ink receiving layer has a two or more-layered laminate structure, the light fastness-enhancing agent for the ink images is preferably contained in an outermost recording layer in the ink receiving layer.

In the present invention, the phenolic compounds usable for the light fastness-enhancing agent for the ink images include, for example, dihydroxybenzene, dihydroxybenzene sulfonic acid and water-soluble salt thereof, dihydroxybenzene disulfonic acid and water soluble salts thereof, monohydroxybenzene sulfonic acid and water-soluble salts thereof, hydroxybenzoic acid and water-soluble salts thereof, sulfosalicylic acid and water-soluble salts thereof, albutin, mononaphthols, mononaphtholsulfonic acids and water soluble salts thereof and dinaphthols dinaphtholsulfonic acids and water soluble salts thereof. The phenolic compounds are preferably selected from hydroquinone, hydroquinonesulfonic acid, hydroquinone-disulfonic acid, pyrrocatechol, pyrro-catechol-3,5-disufonic acid, hydroxybenzoric acid, sulfosalicylic acid salts, hydroxybenzenesulfonic acid salts, albutin, and various naphthol compounds. Particularly the hydroquinone compounds, the pyrrocatechol compounds and/or the phenol sufonate salts are preferably employed to impart excellent light fastness to the recorded ink images. Among these compounds, particularly, pyrrocatechol-3,5-disulfonate salt (sodium salt: TYLON), p-hydroxybenzenesulfonate salt, and/or hydroquinone-β-D-glucoside (albutin) can cause the light fastness of the ink images recorded on the resultant recording sheet to be significantly enhanced.

Further, the phenolic compound is optionally employed together with various types of salts of metals, for example, sodium, magnesium, calcium, aluminum, phosphorus, titanium, iron, nickel, copper and zinc, for example, nitrate salts, sulfate salts, phosphate salts, hydrogen phosphate salts, citrate salts or propionate salts. Particularly, when the phenolic compound is used in combination with a metal salt selected from divalent metal salts, preferably a chloride of magnesium or calcium, the light fastness of the ink images recorded on the resultant recording sheet can be significantly enhanced. The reasons for the significant enhancement of the light fastness of the ink images by use of the metal' salts in combination with the phenolic compounds has not yet been fully clarified. It is assumed that the dye for the ink jet recording, which has a low resistance to fading with light radiation, is stabilized and protected by the phenolic compounds or the combination of the phenolic compounds with the metal salts.

The boric acid and borate salts usable as light fastness-enhancing agent for the ink images include orthoboric acid, methaboric acid, tetraboric acid, orthoborate salts, methaborate salts, tetraborate salts, pentaborate salts and octaborate salts. The metals for forming the borate salts include alkali metals (sodium, potassium etc.), and alkaline earth metals (calcium, magnesium, barium, etc.).

The cyclodextrin compounds usable as the light fastness-enhancing agent for ink images include α-cyclodextrin, β-cyclodextrin, γ-cycrodextrin, alkylated cyclodextrins, hydroxyalkylated cyclodextrins and cation-modified cyclodextrins. Among them, γ-cyclodextrin has a high water-solubility and thus can be contained in the ink receiving layer with a high efficiency, and is particularly useful in practice.

The amount of the light fastness-enhancing agent for the ink images to be contained in the ink receiving layer is variable in response to the composition of the cationic composite fine particles and is established in an appropriate range to not affect on the ink absorption of the resultant ink receiving layer.

There is no limitation to the coating amount of the ink receiving layer. Usually, the coating amount of the ink receiving layer is preferably, in total, 1 to 100 g/m², more preferably 2 to 50 g/m². When the coating amount is less than 1 g/m², the resultant ink receiving layer may have an unsatisfactory uniformity and an insufficient smoothness, and when the coating amount is more than 100 g/m², the resultant ink receiving layer may have cracks.

The coater for forming the ink receiving layer may be selected from conventional coating apparatuses, for example, a blade coater, an air knife coater, a roll coater, a bar coater, a gravure coater, a rod blade coater, a lip coater, a die coater, a cartain coater and a slide bead coater.

### EXAMPLES

The present invention will be further illustrated by the following examples which are not intended to restrict the scope of the present invention in any way.

With respect to the inorganic pigment particles, the pulverization of secondary particles of a pigment or particles containing the secondary particle of the pigment does not cause the size of primary particle size of the pigment to be changed.

In the examples, the ink jet recording sheet was prepared by using, as a substrate sheet, a polyethylene resin-coated paper sheet which was a non-ink medium absorbing sheet, for the purpose of accurately evaluating the recording performances of an ink receiving layer alone formed on the substrate sheet, while preventing, as for as possible, the influence of the substrate sheet on the ink receiving layer; and forming the ink receiving layer on the substrate sheet.

### Example 1

### Preparation of a substrate sheet

An aqueous pulp slurry having a consistency of 0.5% by mass was prepared from a mixture of a soft wood bleached kraft pulp (NBKP) having a standard freeness of 250 ml, determined in accordance with JIS P 8121 with a hard wood bleached kraft pulp (LBKP) having a standard freeness of 280 ml in a mass ratio of 2:8. The aqueous pulp slurry was mixed with, based on the bone dry mass of the pulp mixture, 2.0% by mass of a cation-modified starch, 0.4% by mass of an alkylketene dimer, 0.1% by mass of an anion-modified polyacrylamide resin, and 0.7% by mass of a polyamidepolyamineepichloro-hydrin, while fully agitating, to provide a paper-forming pulp slurry. The paper-forming pulp slurry was subjected to a paper-forming procedure using a Fourdrinier machine, the resultant wet paper sheet was successively passed through a dryer, a size press and a machine calender, to produce a paper sheet having a basis mass of 180 g/m² and a density of 1.0 g/cm³. In the size press procedure, a size press liquid was prepared in a concentration of 5% by mass by dissolving, a mixture of a carboxyl-modified polyvinyl alcohol with sodium chloride in a mass mixing ratio of 2:1, in water, while heating the mixture, and the resultant size press liquid was coated on the front and back surfaces of the dried paper sheet in a total coating layer of 25 ml/m², and dried, to provide a size pressed paper sheet.

The front and back surfaces of the calendered paper sheet were pre-treated by a corona discharge.

Separately, a polyolefin resin composition having the following composition was prepared while mixing and stirring by using a Banbury mixer.

| Component | Parto by mass |
|---|---|
| Long linear chain low density polyethylene resin (having a density of 0.926 g/cm³ and a melt index of 20 g/10 minutes | 35 |
| Low density polyethylene resin (density: 0.919 g/cm³, melt index: 2 g/10 minutes) | 50 |
| Anatase type titanium dioxide (trademark: A-220, made by ISHIHARA SANGYO K.K.) | 15 |
| Zinc stearate | 0.1 |
| Antioxidant (trademark: Irganox 1010; made by Ciba Geigy) | 0.03 |
| Ultramarine blue (trademark: Bluish Ultramarine Blue No. 2000, made by DAIICHIKASEI K.K.) | 0.09 |
| Fluorescent brightening agent (trademark: UVITEX OB, made by Ciba-Geigy) | 0.3 |

The polyolefin resin composition was supplied to a melt-extruder and extruded through a T-type die at a melt temperature of 320°C to laminate a front (felt) surface of the calendered paper sheet at a front laminate amount of 25 g/m² and to laminate a back (wire) surface of the calender paper sheet at a back laminate amount of 20 g/m², the laminated front polyethylene resin layer was brought into contact with a mirror-finished periphery of a front cooling roller and the laminated back polyethylene resin layer was brought into contact with a roughened periphery of a back cooling roller to cool and solidify the front and back polyethylene resin layers. A substrate sheet having a smoothness of the front surface of 6000 seconds determined in accordance with J. TAPPI No. 5, Ohen type tester) and an opaqueness of 93%, determined in accordance with JIS P 8138, was obtained.

### Preparation of an aqueous silica dispersion (a)

To a gel method silica pigment (trademark: SILOJET P 403, made by GRACE DEVISON CO.) having an average secondary particle size of 3 µm, a combination of a pulverize-dispersing procedure in water using a sand grinder with a further pulverize-dispersing procedure in water using a microfluitizer (Model: M110/EH, made by MICROFLUIDICS) was repeatedly applied, to provide a 10% by mass aqueous silica dispersion (a) containing fine silica particle having an average secondary particle size of 450 nm.

### Preparation of an aqueous inorganic pigment-cationic resin complex fine particle dispersion (A)

A precipitation method silica pigment (trademark: Finesil X-45, made by TOKUYAMA K.K.) having an average primary particle size of about 10 nm and an average secondary particle size of about 4.5 µm was pulverized and dispersed in water by using a sand grinder; then, into the resultant aqueous silica dispersion, a cationic resin (trademark;: HYMAX SC-700M, made by HYMO CO.) comprising a polyvinylamine copolymer ammonium chloride having a molecular weight of 30,000 and a content of polymerization units having a five-membered cyclic amidine structure of 60 molar% was mixed in an amount of 25 parts by dry solid mass per 100 parts by dry solid mass of the silica dispersion.

The resultant mixture was subjected to a pulverize-dispersing procedure using a microfluitizer (Model: M110/EM, made by MICROFLUIDICS, CO.) and, then, to the resultant dispersion, a combination of a pulverize-dispersing procedure using the above-mentioned sand grinder, and a further pulverize-dispersing procedure using the above-mentioned microfluitizer was repeatedly applied, to provide a target aqueous dispersion (A) of the cationic composite fine particles having an average secondary particle size controlled to 800 nm. The aqueous dispersion (A) had a dry solid content of 8% by mass.

The dispersing property (viscosity) and dispersion stability of the aqueous dispersion (A) are shown in Table 1.

### Production of an ink jet recording sheet

A coating liquid having a total concentration of 16% by dry solid mass was prepared by mixing the silica dispersion (a) in an amount of 100 parts in terms of dry solid mass of silica with an aqueous solution of polyvinyl alcohol (trademark: PVA 135H, made by KURARAY K.K.) having a degree of polymerization of 3500 and a degree of saponification of 99% or more in an amount of 20 parts by dry solid mass. The coating liquid was coated in a dry mass amount of 18 g/m² on a front surface of the substrate sheet and the resultant loating liquid layer was dried at a temperature of 120°C by using a hot air blast dryer, to form an inside recording layer.

A further coating liquid having a concentration of 7.5% by dry solid mass was prepared by mixing the aqueous dispersion (A) of the inorganic pigment-cationic resin composite fine particle in a dry solid amount of 100 parts by mass with an aqueous solution of polyvinyl alcohol (trademark: PVA 135H, made by KURARAY K.K.) in a amount of 20 parts by dry solid mass. The further coating liquid was coated in a dry mass amount of 3 g/m² on the surface of the inside recording sheet and the resultant further coating liquid layer was coated at a temperature of 120°C by using a hot air blast dryer, to form an outermost recording layer. A two-layered ink receiving layer consisting of the inside recording layer and the outermost recording layer was obtained.

### Example 2

An ink jet recording sheet was produced by the same procedures as in Example 1, except that in the aqueous dispersion (A), the cationic composite fine particles had an average secondary particle size controlled to 400 nm, and the total dry solid concentration of the aqueous dispersion (A) of the cationic fine particles was 8% by mass.

### Example 3

An ink jet recording sheet was produced by the same procedures in Example 1, except that the aqueous dispersion (A) of inorganic pigment-cationic resin composite fine particles was replaced by an aqueous dispersion (B) of inorganic pigment-cationic resin composite fine particles prepared by the following procedures.

### Preparation of an aqueous dispersion (B) of inorganic pigment-cationic resin composite fine particles

A fumed silica pigment (Combustion method silica, trademark: Rheorosil QS-30, made by TOKUYAMA K.K) having a specific surface area of 300 m²/g and an average primary particle size of about 10 nm) was pulverized and dispersed in water by repeatedly applying thereto a combination of a disperse-pulverizing procedure using a sand grinder in water and a further disperse-pulverizing procedure using a nanomizer, and then the resultant dispersion was classified, to provide a 10% by mass aqueous dispersion (B) of fine silica particles having an average secondary particle size of 80 nm.

The dispersion (b) was mixed with a cationic resin (trademark: HYMAX SC-700M, made by HYMO CO.) comprising a polyvinylamine copolymer ammonium chloride having polymerization units having a five-membered cyclic amidine structure in an content of 60 molar%, and having a molecular weight of 30,000, in an amount of 15 parts by dry solid mass per 100 parts by dry solid mass of the silica dispersion (b), to cause the silica particles and the cationic resin to be agglomerated with each other and the resultant mixture to exhibit an increased viscosity. To the resultant agglomerate dispersion having the increased viscosity, a pulverize-dispersing procedure using the nanomizer was repeatedly applied to provide a target aqueous dispersion of the silica-cationic resin composite fine particles having an average secondary particle size of 200 nm in a dry solid content of 8% by mass.

### Example 4

An ink jet recording sheet was produced by the same procedures as in Example 1, except that the aqueous dispersion (A) of the inorganic pigment-cationic resin composite fine particles was replaced by an aqueous dispersion (C) produced as follows.

### Preparation of an aqueous dispersion (C) of inorganic pigment-cationic resin composite fine particles

Alumina particles (γ-alumina, trademark: AKP-G020, made by SUMITOMO KAGAKUKOGYO K.K) having an average primary particle size of 30 nm were pulverized and dispersed in water by using a sand grinder. The resultant aqueous dispersion (c) was mixed with a cationic resin (trademark: HYMAX SC-700, made by HYMO CO.) comprising a polyvinylamine copolymer ammonium chloride having polymerization units having a five-membered cyclic amidine structure, in a content of 60 molar%, and having a molecular weight of 30,000, in an amount of 5 parts by dry solid mass per 100 parts, in terms of dry solid amount of alumina, of the aqueous dispersion (c). To the resultant dispersion, a pulverize-dispersing procedure using a microfluitizer (model: M110/EH, made by MICROFLUIDICS CO.) was repeatedly applied, to prepare a target aqueous dispersion (C) of alumina-cationic resin composite fine particles having an average secondary particle size of 400 nm, in a dry solid content of 10% by mass.

### Example 5

An ink jet recording sheet was produced by the same procedures in Example 1, except that the cationic resin under the trademark of HYMAX SC-700 was replaced by another cationic resin (trademark: HYMAX SC-700L, produced by HYMO CO.) comprising a polyvinylamine copolymer ammonium chloride having polymerization units having a five-membered cyclic amidine structure in a content of 60 molar%, and having a molecular weight of 200,000. The resultant aqueous dispersion contained silica-cationic resin composite fine particles having an average secondary particle size of 200 nm and had a dry solid content of 8% by mass.

### Comparative Example 1

An ink jet recording sheet was produced by the same procedures as in Example 1, except that the aqueous dispersion (A) was replaced by an aqueous dispersion (D) of inorganic pigment-cationic resin composite fine particles prepared as follows.

### Preparation of an aqueous dispersion (D) of inorganic pigment-cationic resin composite fine particles

A precipitation method silica pigment (trademark: FINESIL X-37, made by TOKUYAMA K.K.) having an average primary particle size of about 10 nm and an average secondary particle size of about 2.6 µm, was dispersed in a concentration of 10% by mass, in water, and the silica dispersion was mixed with a cationic resin (trademark: HYMAX SC-700M) comprising a polyvinylamine copolymer ammonium chloride having polymerization units having a five-membered cyclic amidine structure in an amount of 60 molar%, in a dry solid amount of 15 parts by mass per 100 parts in terms of dry solid mass of silica, of the aqueous silica dispersion. The mixture was dispersed by using a homomixer at a revolution rate of 1,000 rpm for 30 minutes. An aqueous dispersion (D) containing silica-cationic resin composite fine particles having an average secondary particle size of 2,600 nm, in a dry solid content of 8% by mass.

### Comparative Example 2

An ink jet recording sheet was produced by the same procedures as in Example 1, except that the cationic resin under the trademark of HYMAX SC-700M was replaced by an other cationic resin (trademark: UNISENCE CP-103, made by SENKA K.K.) comprising polydiallyldimethyl ammonium chloride and having a molecular weight of 100,000, and the resultant aqueous dispersions contained silica-cationic resin complex fine particles having an average secondary particle size of 200 nm, in a dry solid content of 8% by mass.

### Comparative Example 3

An ink jet recording sheet was produced by the same procedures as in Example 2 except that, in the preparation of the aqueous dispersion, the average secondary particle size of the silica-cationic resin complex fine particles was controlled to 1.5 µm. The resultant aqueous dispersion had a dry solid content of the silica-cationic resin composite fine particles of 8% by mass.

### Comparative Example 4

An ink jet recording sheet was produced by the same procedures as in Example 2, except that, in the preparation of the silica-cationic resin composite fine particles, the precipitation method silica under the trademark of FINESIL X-45, made by TOKUYAMA K.K was replaced by an other precipitation method silica (trademark: MIZUKASIL P-527, made by MIZUSAWA KAGAKU K.K.) having an average primary particle size of about 50 nm and an average secondary particle size of about 1.6 µm, and an aqueous silica dispersion was prepared by pulverize-dispersing in water by using a sand grinder. The resultant aqueous cationic composite fine particle dispersion contained silica-cationic resin composite fine particles having an average secondary particle size of 400 nm, in a dry solid content of 8% by mass.

### Evaluation tests

In each of the examples and comparative examples, the dispersing property and dispersion stability of the aqueous dispersion of the inorganic pigment-cationic resin composite fine particles, the gloss and ink absorption of the ink jet recording sheet produced by using the aqueous dispersion, and the water resistance and wet blotting resistance of the ink images recorded on the recording sheet were evaluated by the following tests.

A printer for the evaluation tests was an ink jet printer (Model: PM-900C, made by EPSON K.K.).

Also, in the test of the wet blotting resistance of the printed ink images, the pattern of the images was ISO 12640: 1997(E), NIA Portrait.

### (1) Dispersing property of dispersion

After the aqueous dispersion was prepared and left to stand at room temperature for one hour, the viscosity of the resultant dispersion was measured by using a B type viscometer.

### (2) Dispersion stability

After an aqueous dispersion was prepared and left to stand at room temperature for one hour, the resultant aqueous dispersion was checked to determine whether the dispersion had gelled.

### (3) Gloss of the ink jet recording sheet

A sample of the ink jet recording sheet was subjected to a measurement of a 75 degree specular gloss in accordance with JIS P 8142, using a gloss meter (model: GM-26PRO/Auto, made by MURAKAMI SEARCH LABORATORY K.K).

### (4) Ink absorption

Solid printings with a green ink and a blue ink were applied to a sample of the ink jet recording sheet, and the ink absorption of the recording sheet sample was checked with the naked eye and evaluated into the following four classes.

| Class | Ink absorption |
|---|---|
| 4. | Ink absorption rate is high. No run of ink over the images is found. |
| 3. | No run of ink over the images is found. |
| 2. | Uneven absorption of ink is found. |
| 1. | Ink overflows over the images. |

### (5) Wet Water resistance of ink images

Solid printings with a green ink and a blue ink were applied to a sample of the ink jet recording sheet, and the printed recording sheet sample was left to stand for 24 hours. Then, a water drop was dropped on a printed portion of the printed sample, and one minute after the dropping, the water drop was wiped off. Then, the water-wetted portion of the printed portion of the sample was checked by naked eye and the check results were evaluated into the following four classes.

| Class | Water resistance |
|---|---|
| 4. | No blotting of ink is found. |
| 3. | Very slight blotting of ink is found. Good. |
| 2. | Slight blotting of ink is found. Usable in practice. |
| 1. | Significant blotting of ink is found. Usability in practice is low. |

### (6) Wet blotting resistance of ink images

The solid printings were carried out in the same manner as in the text (5). The solid printed sample, was stored in an environment testing room at a temperature of 35°C at a relative humidity of 85% for two days. Then the ink images were checked to determine whether wet blotting of the ink over the images occurred, by naked eye. The check results were evaluated into the following four classes.

| Class | Wet blotting resistance |
|---|---|
| 4. | Substantially no blotting is found. Very good. |
| 3. | Slight blotting is found. Usable in practice. |
| 2. | Blotting is found. Usability in practice is low. |
| 1. | Significant blotting is found. Unusable in practice. |

Test results are shown in Table 1.

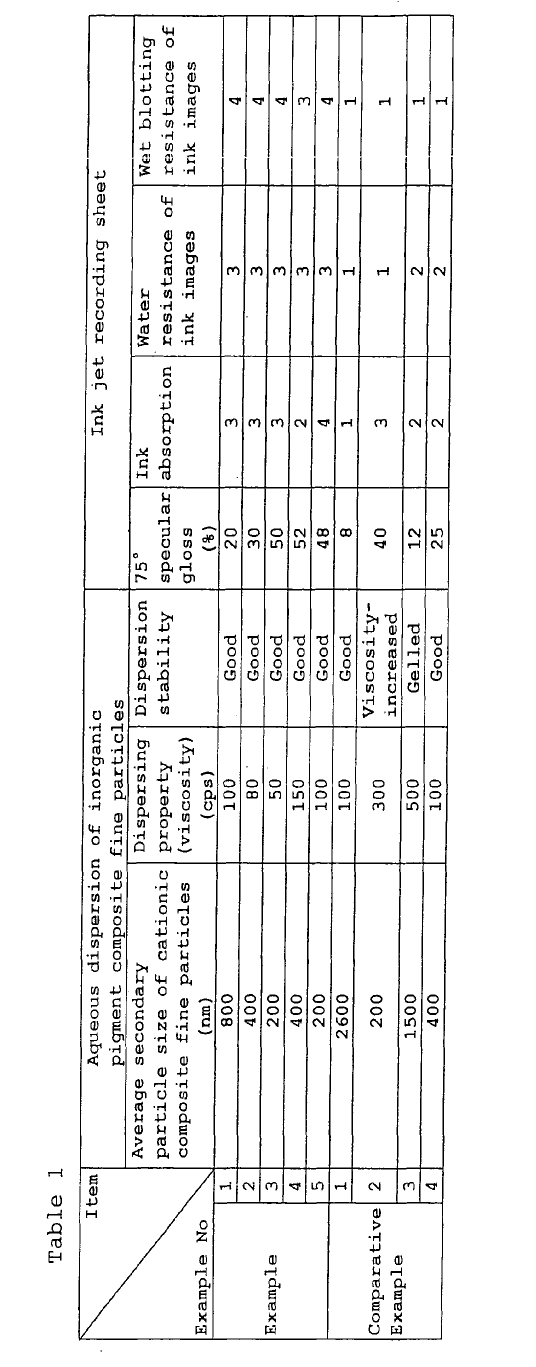

Table 1 clearly shows that the aqueous dispersion of the inorganic pigment-cationic resin composite fine particles of the present invention has excellent dispersing property and dispersion stability, and the ink jet recording sheet of the present invention produced by using the aqueous dispersion is capable of recording ink images thereon having a good gloss comparable to silver-salt photographic images and a satisfactory water resistance and a satisfactory wet blotting resistance.

### INDUSTRIAL APPLICABILITY

The aqueous dispersion of the inorganic pigment-cationic resin composite fine particles of the present invention has a excellent dispersing property and dispersion stability in practice, the ink jet recording sheet of the present invention produced by using the aqueous dispersion exhibit excellent gloss and ink absorption, and the ink images recorded on the recording sheet exhibit excellent water resistance and wet blotting resistance. Therefore, the aqueous dispersion of the inorganic pigment-cationic resin complex fine particles and the ink jet recording sheet of the present invention are very useful in practice.

## Claims

1. An aqueous dispersion of inorganic pigment-cationic resin composite fine particles, comprising an aqueous medium and solid particles dispersed in the aqueous medium,
wherein
the solid particles comprising inorganic pigment-cationic resin composite fine particles are particles of agglomerates of a cationic resin comprising cationic polymerization units having a five-membered cyclic amidine structure of the formula (1): 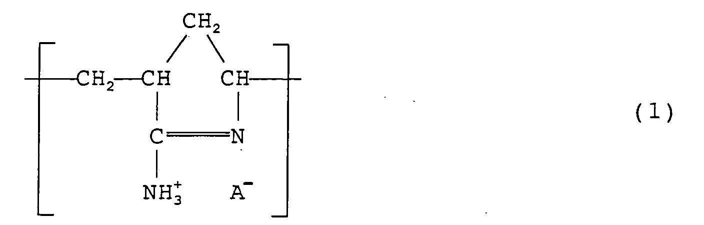 in which formula (1), A⁻ represent an anion,
with inorganic pigment particles having an average primary particle size of 3 to 40 nm, the agglomerate particles having an average secondary particle size controlled within the range of from 10 nm to 1.0 µm.

2. The aqueous dispersion of inorganic pigment-cationic resin composite fine particles as claimed in claim 1, wherein the cationic resin comprises 20 to 90 molar% of the cationic polymerization units having a five-membered cyclic amidine structure of the formula (1) and 10 to 80 molar% of a polymerization units of the general formula (2): 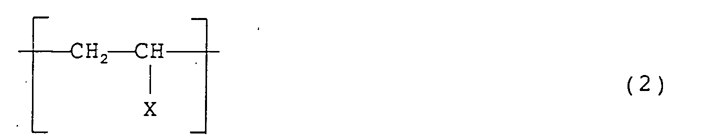 in which formula (2), X represents a member selected from the group consisting of a cyano group, amine hydrochloride groups and a formamide group.

3. The aqueous dispersion of inorganic pigment-cationic resin composite fine particles as claimed in claim 1 or 2, wherein the cationic polymerization units of the formula (1) and the polymerization units of the formula (2) are present in a molar ratio in the range of from 10:1 to 1:3.

4. The aqueous dispersion of inorganic pigment-cationic resin composite fine particles as claimed in any one of claims 1 to 3, wherein the cationic resin has a weight average molecular weight of 10,000 or more.

5. The aqueous dispersion of inorganic pigment-cationic resin composite fine particles as claimed in any one of claims 1 to 4, wherein, in the inorganic pigment-cationic resin composite fine particles, the inorganic pigment and the cationic resin are present in a mass ratio in the range of from 100:1 to 100:30.

6. The aqueous dispersion of inorganic pigment-cationic resin composite fine particles as claimed in any one of claims 1 to 5, wherein the average secondary particle size of the inorganic pigment-cationic resin composite fine particles is in the range of from 10 nm to 0.5 µm.

7. The aqueous dispersion of inorganic pigment-cationic resin composite fine particles as claimed in any one of claims 1 to 6, wherein the inorganic pigment comprises a silica pigment.

8. The aqueous dispersion of inorganic pigment-cationic resin composite fine particles as claimed in claim 7, wherein the silica pigment comprises fumed silica particles having a specific surface area of 180 to 380 m²/g.

9. An ink jet recording sheet comprising a substrate sheet and at least one ink receiving layer formed from a coating liquid containing the aqueous dispersion of inorganic pigment-cationic resin composite fine particles as claimed in any one of claims 1 to 8, and a binder, on least one surface of the substrate sheet.
